(19)

Europäisches Patentamt
European Patent Office
Office européen des brevets

(11) **EP 3 734 343 A1**

(12) **EUROPEAN PATENT APPLICATION**
published in accordance with Art. 153(4) EPC

(43) Date of publication:
**04.11.2020 Bulletin 2020/45**

(51) Int Cl.:
***G02B 13/04*** *(2006.01)*

(21) Application number: **18897688.0**

(22) Date of filing: **26.12.2018**

(86) International application number:
**PCT/JP2018/047818**

(87) International publication number:
**WO 2019/131750 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2017   JP 2017253614**
**28.12.2017   JP 2017253615**

(71) Applicant: **Nittoh Inc.**
**Suwa-shi, Nagano 392-0131 (JP)**

(72) Inventor: **MOCHIZUKI, Keiichi**
**Suwa-shi, Nagano 392-0021 (JP)**

(74) Representative: **Körber, Martin Hans**
**Mitscherlich PartmbB**
**Patent- und Rechtsanwälte**
**Sonnenstrasse 33**
**80331 München (DE)**

(54) **LENS SYSTEM AND IMAGING DEVICE**

(57)    A lens system (10) for image pickup includes, in order from an object side (11): a first lens group (G1) that has negative refractive power and is fixed during focusing; a second lens group (G2) that has positive refractive power and moves during focusing; a third lens group (G3) that has positive refractive power and is fixed during focusing; and a fourth lens group (G4) that has a stop disposed on the object side, is fixed during focusing, has positive refractive power, and is disposed closest to an image plane side (12). The first lens group includes a first lens (L11) with positive refractive power that is disposed closest to the object side and a terminal lens (L13) with negative refractive power disposed closest to the image plane side.

Fig. 1

EP 3 734 343 A1

**Description**

Technical Field

The present invention relates to a lens system and an image pickup apparatus.

Background Art

Japanese Laid-open Patent Publication No. 2001-228391 discloses a retrofocus-type, inner-focus, wide-angle lens system that has a three-group configuration, a half angle of view of around 44°, and an F number of around 3.5. This wide-angle lens system is composed, in order from the object side, of a negative first lens group, a positive second lens group, and a positive third lens group that includes a stop. During focusing, the second lens group moves in the direction of the optical axis.

Summary of the Invention

There is demand for a telephoto-type image pickup system that is brighter and has little fluctuation in angle of view due to focusing.

One aspect of the present invention is a lens system for image pickup including, in order from an object side: a first lens group that has negative refractive power and is fixed during focusing; a second lens group that has positive refractive power and moves during focusing; a third lens group that has positive refractive power and is fixed during focusing; and a fourth lens group that has a stop disposed on the object side, is fixed during focusing, has positive refractive power, and is disposed closest to an image plane side, wherein the first lens group includes a first lens with positive refractive power that is disposed closest to the object side (the most of object side) and a terminal lens (a group-terminal lens, final lens) with negative refractive power disposed closest to the image plane side.

This lens system is a negative-positive-positive-positive four-group, retrofocus type, is an inner-focus system where only the second lens group moves along the optical axis during focusing, and also has the stop disposed between the third lens group and the fourth lens group that are fixed. A retrofocus type where the lens group closest to the object side has negative refractive power is suited to producing bright images, but is thought to be suited to wide-angle lenses. In this lens system, the first lens group includes the first lens with positive refractive power disposed closest to the object side and the terminal lens with negative refractive power disposed closest to the image plane side, so that with the first lens (that is the lens located the most of object side) and the terminal lens (that is the lens closest to the image plane side), a telephoto-type configuration with a positive-negative arrangement of refractive powers is introduced into the first lens group which as a whole has negative refractive power. Accordingly, the focal length is extended while utilizing a retrofocus-type configuration where it is easy to obtain bright images. As one example, it is possible to provide a lens system with performance that is suited to a telephoto optical system.

The first lens group may include the first lens that is biconvex, has positive refractive power, and is disposed closest to the object side and a lens that is concave on the object side, has negative refractive power, and is disposed closest to the image plane side.

In addition, the rear group with positive refractive power in a retrofocus configuration is divided into three groups to disperse the power and suppress the power of the second lens group that moves during focusing, thereby producing a configuration with little fluctuation in angle of view even when the second lens group moves during focusing. Also, by disposing the stop between the third lens group and the fourth lens group that are fixed and do not move during focusing, the F number is prevented from fluctuating due to focusing. This means that it is possible to provide a telephoto-type lens system where it is possible to freely adjust the focus while hardly considering fluctuations in the angle of view or fluctuations in brightness.

Another aspect of the present invention is a lens system for image pickup including, in order from an object side: a first lens group that has negative refractive power and is fixed during focusing; a second lens group that has positive refractive power and moves during focusing; a third lens group that has positive refractive power and is fixed during focusing; and a fourth lens group that has a stop disposed on the object side, is fixed during focusing, and has positive refractive power, wherein the third lens group includes, on the object side of the stop and from the object side, at least one lens with positive refractive power and a cemented lens that is adjacent to the stop and composed of a lens with positive refractive power and a lens with negative refractive power, and the fourth lens group includes a first cemented lens that is disposed adjacent to the stop and is composed, from the object side, of a lens with negative refractive power and a lens with positive refractive power, a second cemented lens that is composed of a lens with negative refractive power and a lens with positive refractive power, and a lens with negative refractive power.

In this lens system, a stop is disposed between the third lens group and the fourth lens group that are fixed and do not move during focusing, and a plurality of cemented lenses are placed in a symmetrical arrangement of powers centered on the stop. This means that it is possible to provide a lens system where there is little fluctuation in the angle of view and the F number due to focusing and where various aberrations are favorably corrected.

Another aspect of the present invention is an image pickup apparatus (imaging device) including: the lens system described above; and an image pickup element disposed on an image plane side of the lens system.

Brief Description of Drawings

[Fig. 1]

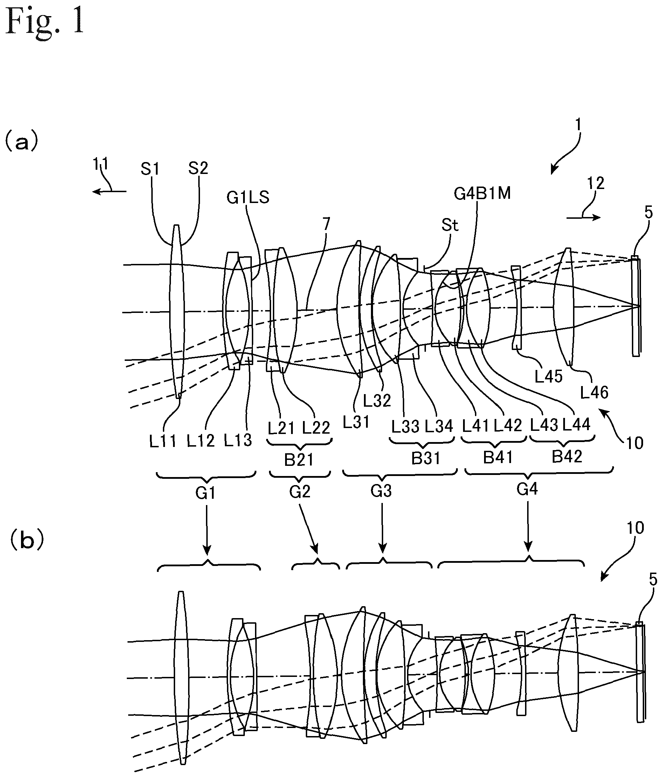

Fig. 1 depicts one example of a lens system and an image pickup apparatus, with Fig. 1(a) depicting a state where the lens system is focused at infinity, and Fig. 1(b) depicting a state where the lens system is focused at a near distance.
[Fig. 2]

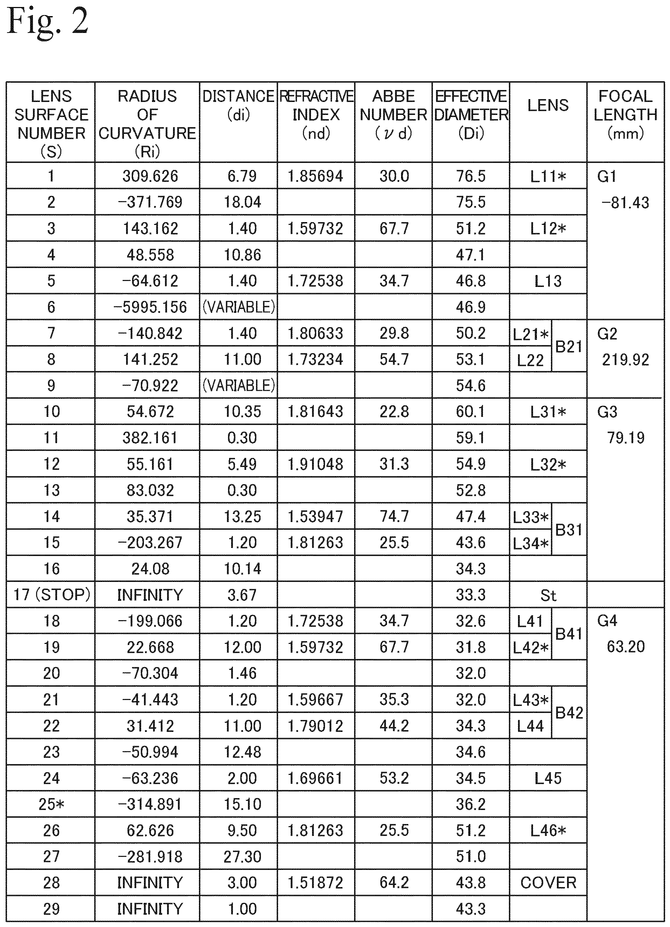

Fig. 2 depicts data on the respective lenses of the lens system depicted in Fig. 1.
[Fig. 3]

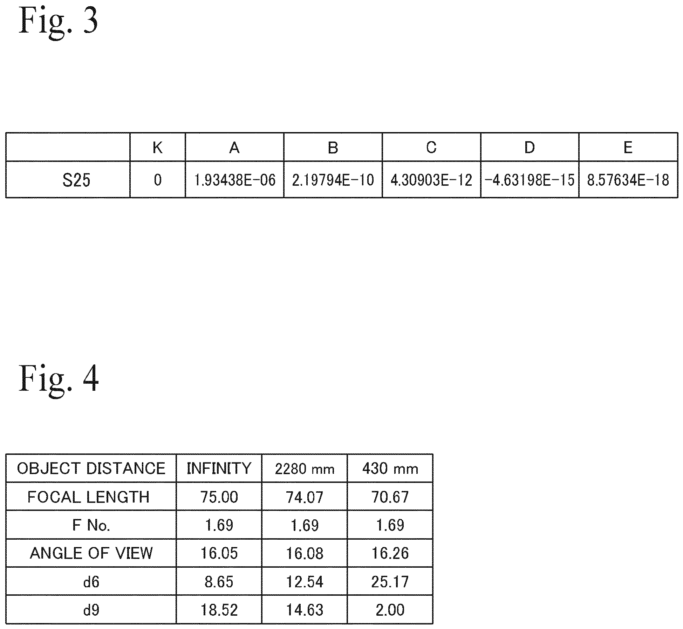

Fig. 3 depicts data on an aspherical surface in the lens system depicted in Fig. 1.
[Fig. 4]
Fig. 4 depicts various numeric values of the lens system depicted in Fig. 1.
[Fig. 5]

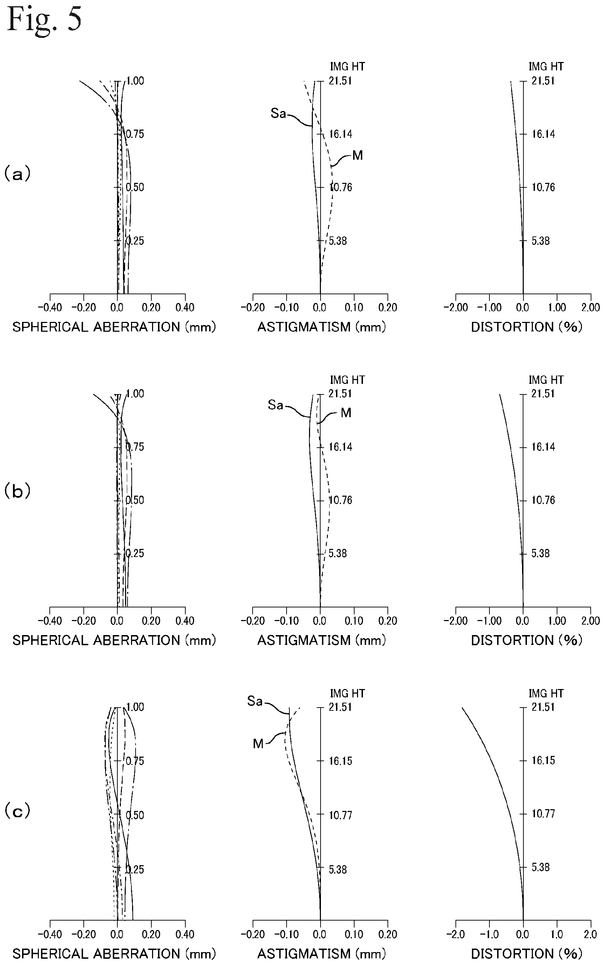

Fig. 5 depicts various aberrations of the lens system depicted in Fig. 1.
[Fig. 6]

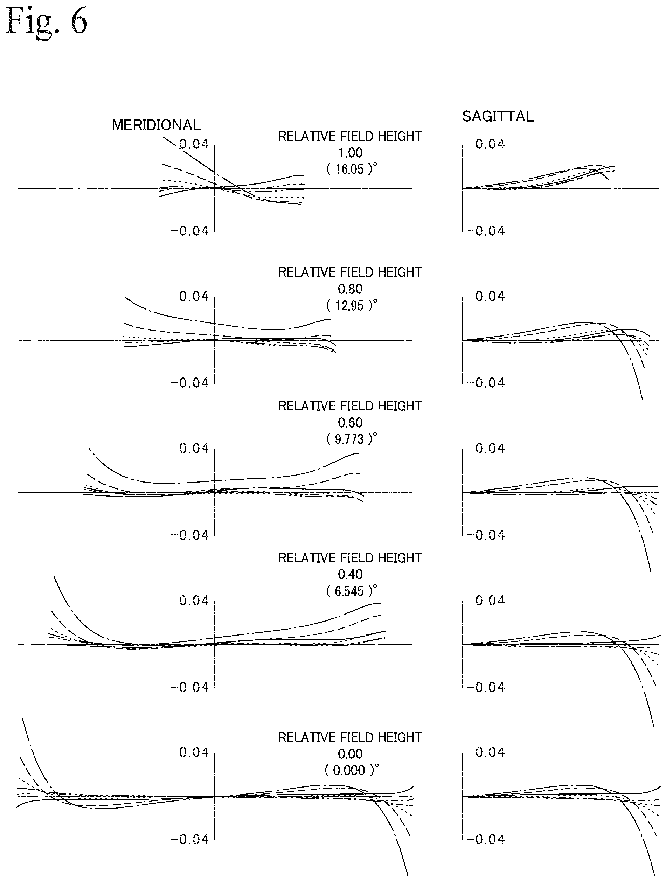

Fig. 6 depicts the transverse aberration at infinity of the lens system depicted in Fig. 1.
[Fig. 7]

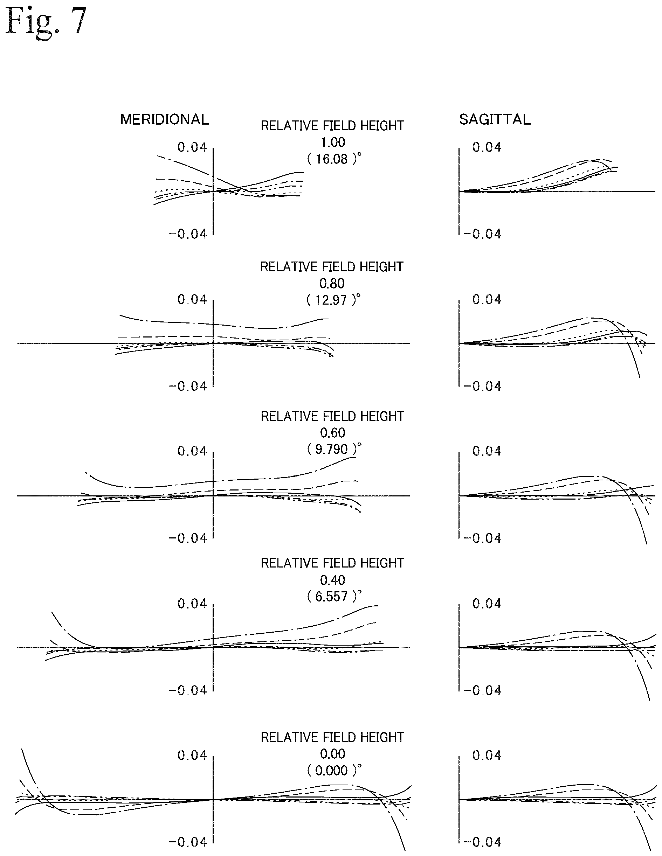

Fig. 7 depicts the transverse aberration at an intermediate distance of the lens system depicted in Fig. 1.
[Fig. 8]

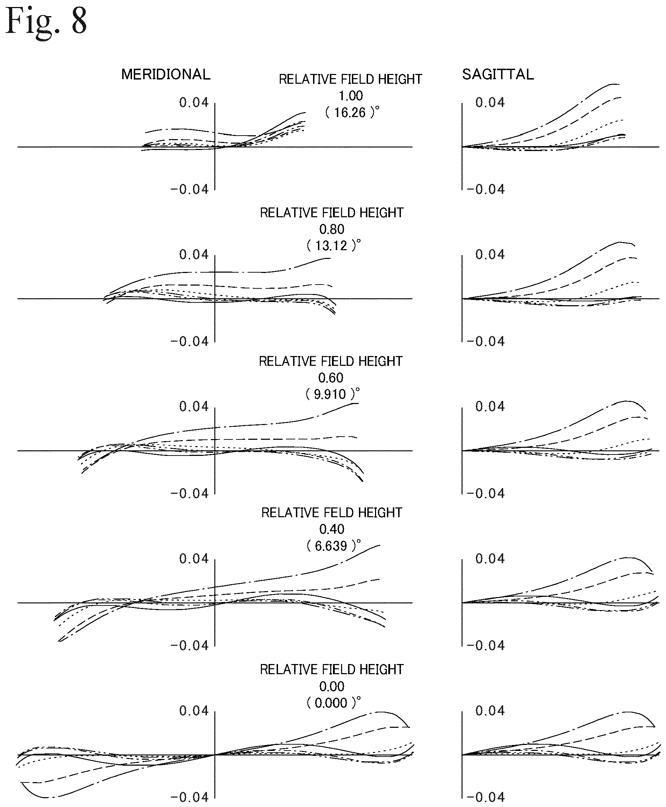

Fig. 8 depicts the transverse aberration at the nearest distance of the lens system depicted in Fig. 1.
[Fig. 9]

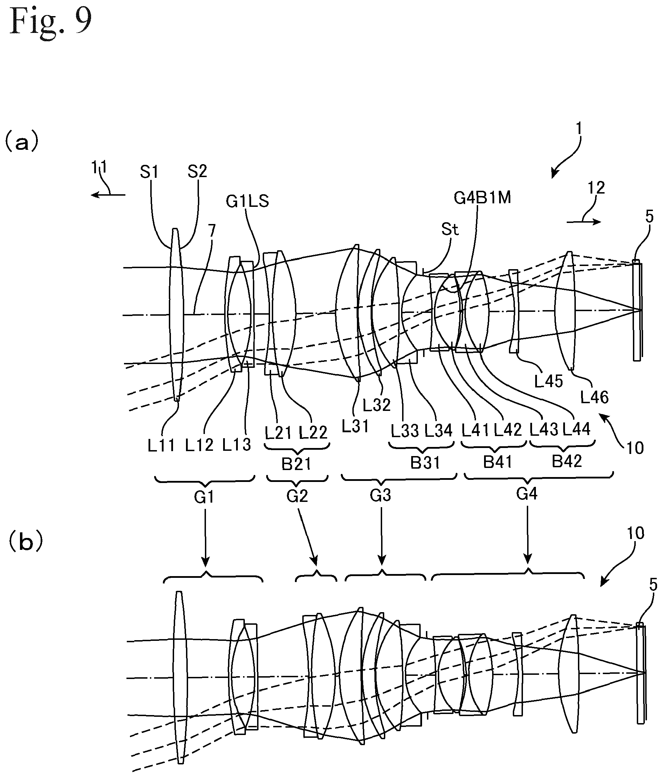

Fig. 9 depicts another example of a lens system and an image pickup apparatus, with Fig. 9(a) depicting a state where the lens system is focused at infinity and Fig. 9(b) depicting a state where the lens system is focused at a near distance.
[Fig. 10]

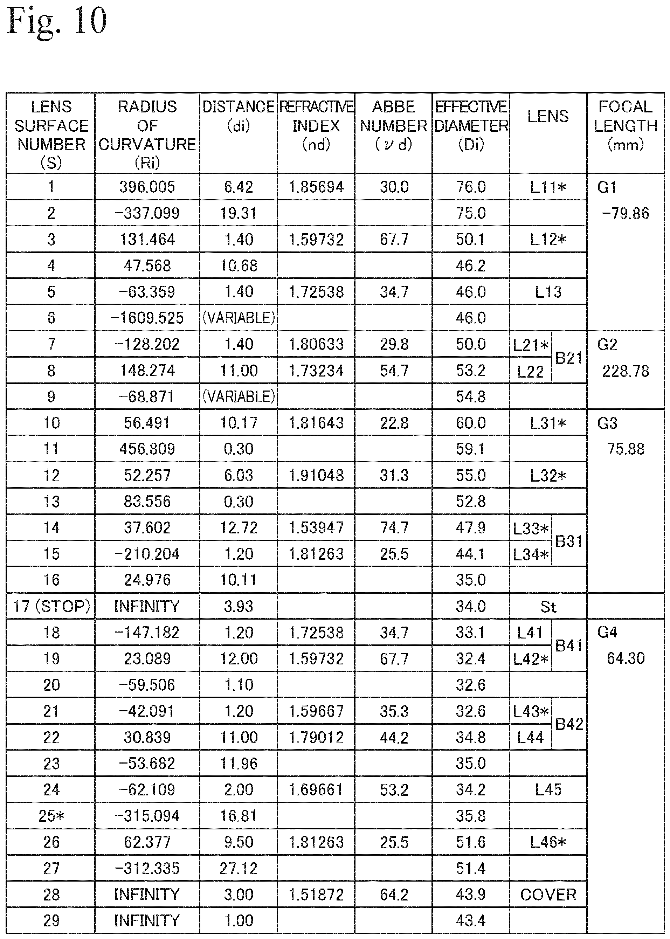

Fig. 10 depicts data on the respective lenses of the lens system depicted in Fig. 9.
[Fig. 11]

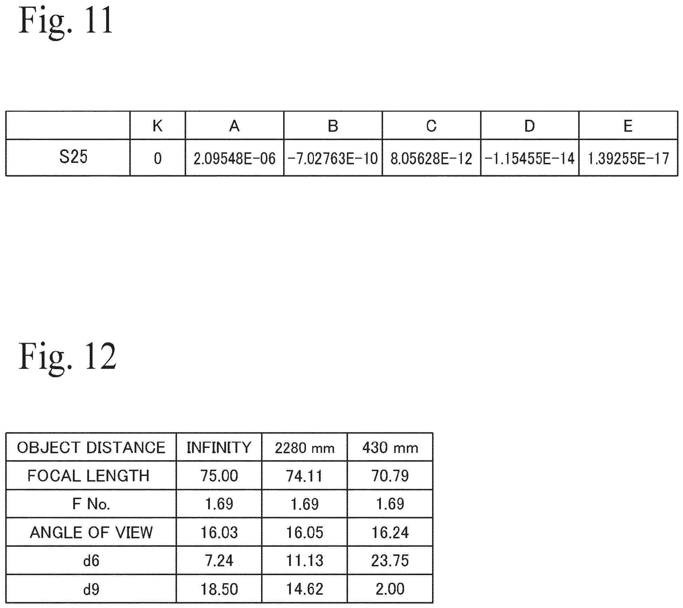

Fig. 11 depicts data on an aspherical surface in the lens system depicted in Fig. 9.
[Fig. 12]
Fig. 12 depicts various numeric values of the lens system depicted in Fig. 9.
[Fig. 13]

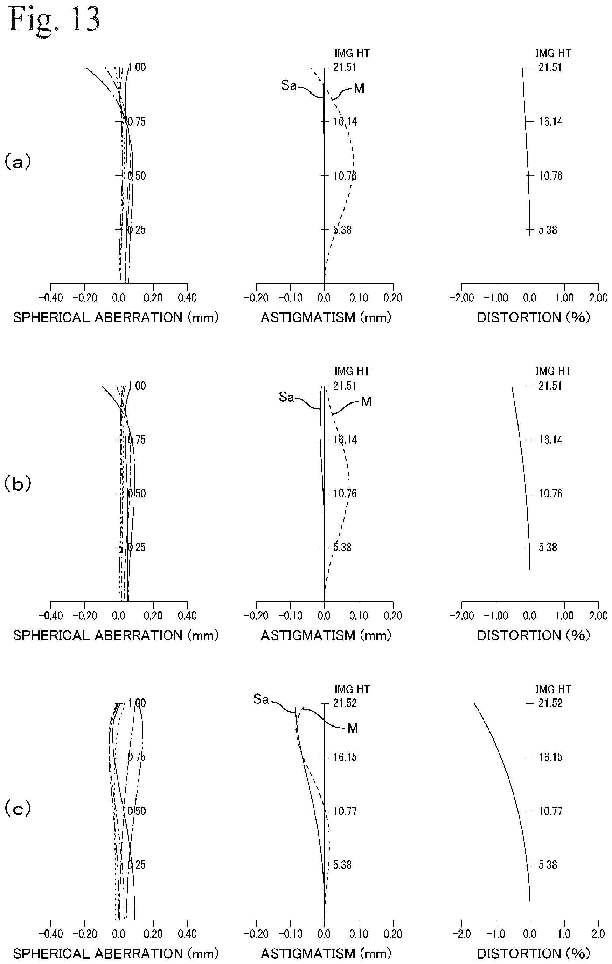

Fig. 13 depicts various aberrations of the lens system depicted in Fig. 9.
[Fig. 14]

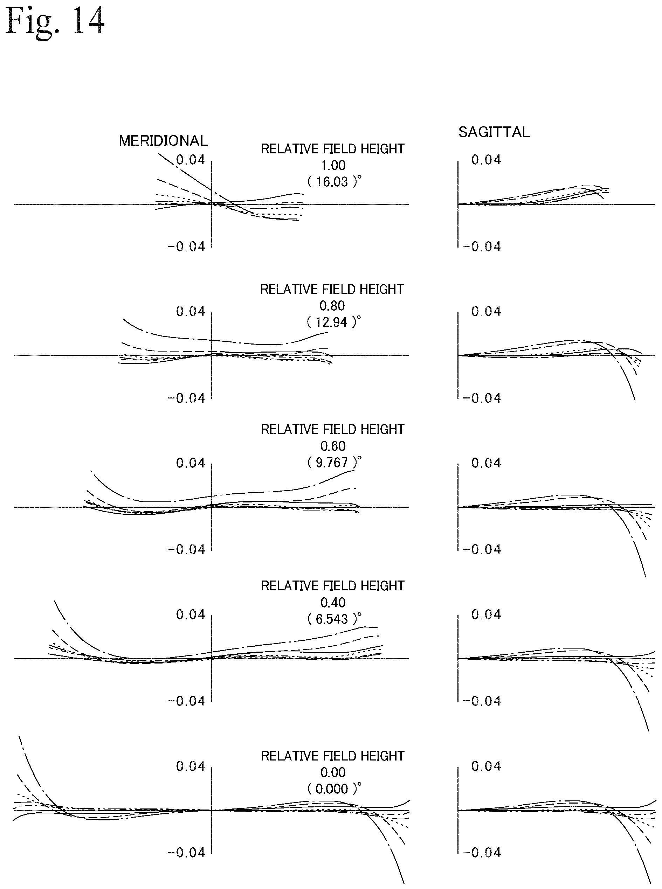

Fig. 14 depicts the transverse aberration at infinity of the lens system depicted in Fig. 9.
[Fig. 15]

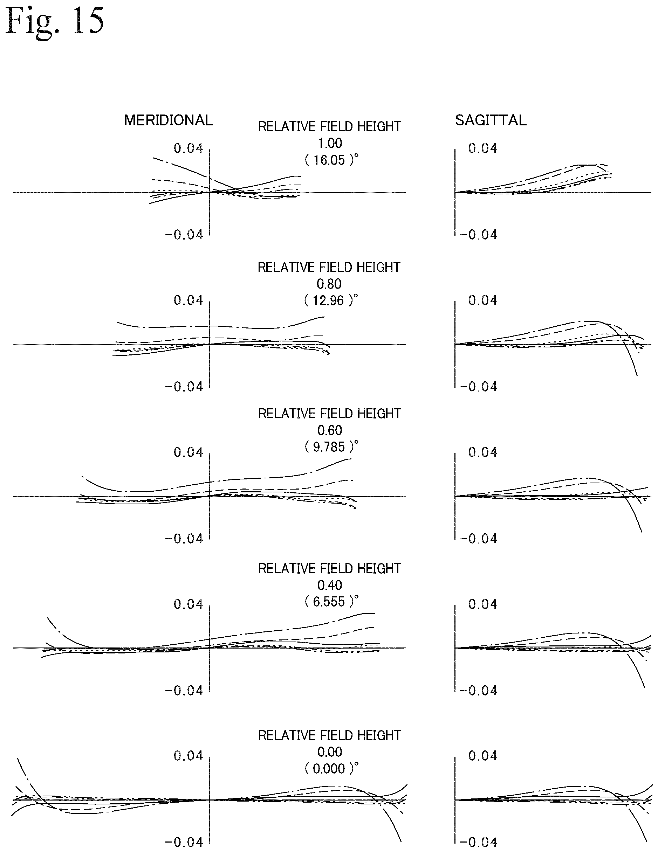

Fig. 15 depicts the transverse aberration at an intermediate distance of the lens system depicted in Fig. 9.
[Fig. 16]

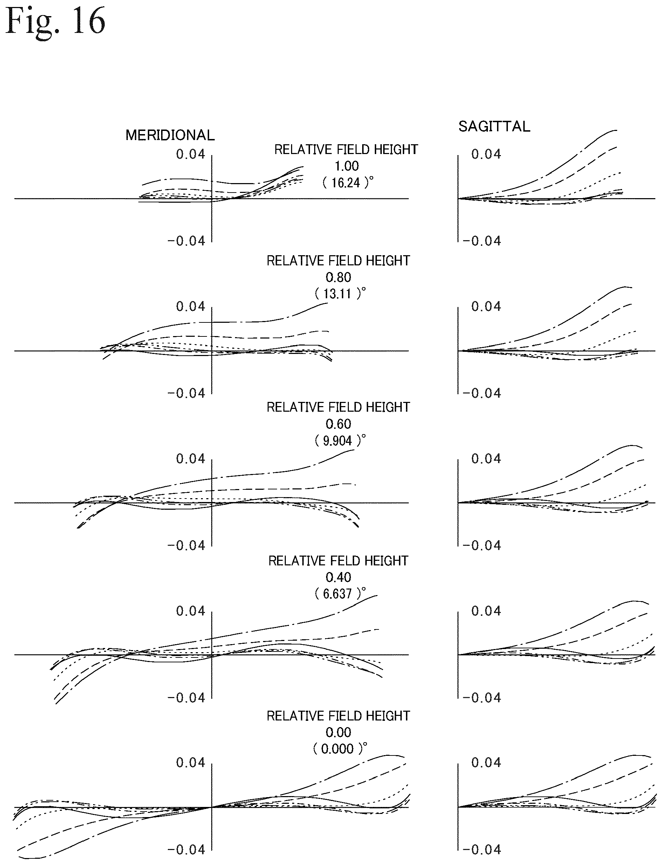

Fig. 16 depicts the transverse aberration at the nearest distance of the lens system depicted in Fig. 9.
[Fig. 17]

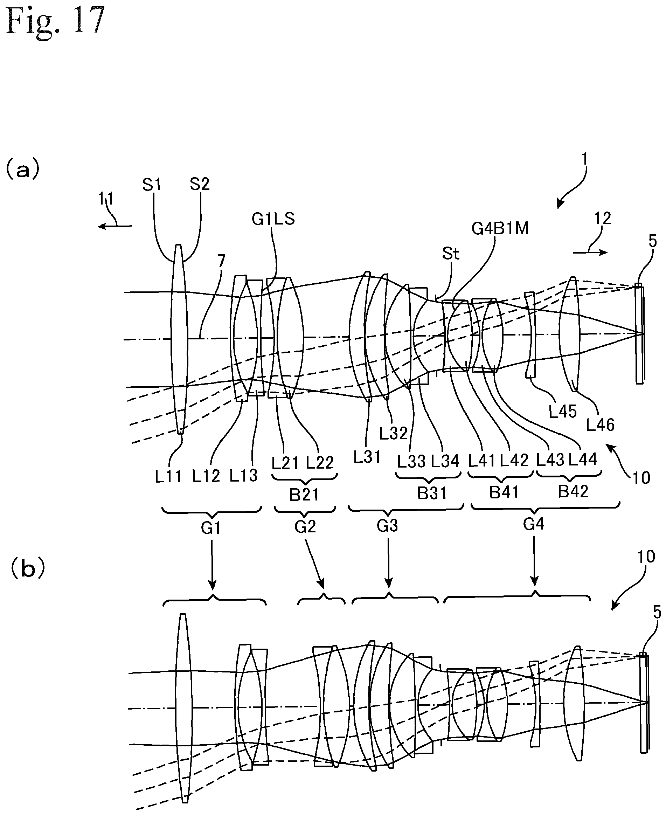

Fig. 17 depicts yet another example of a lens system and an image pickup apparatus, with Fig. 17(a) depicting a state where the lens system is focused at infinity and Fig. 17(b) depicting a state where the lens system is focused at a near distance.
[Fig. 18]

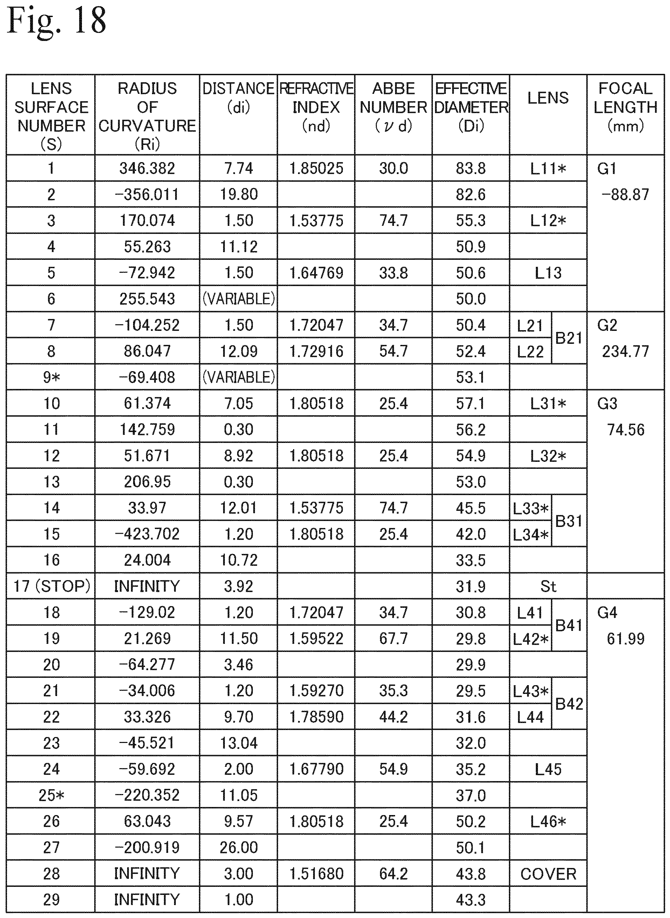

Fig. 18 depicts data on the respective lenses of the lens system depicted in Fig. 17.
[Fig. 19]

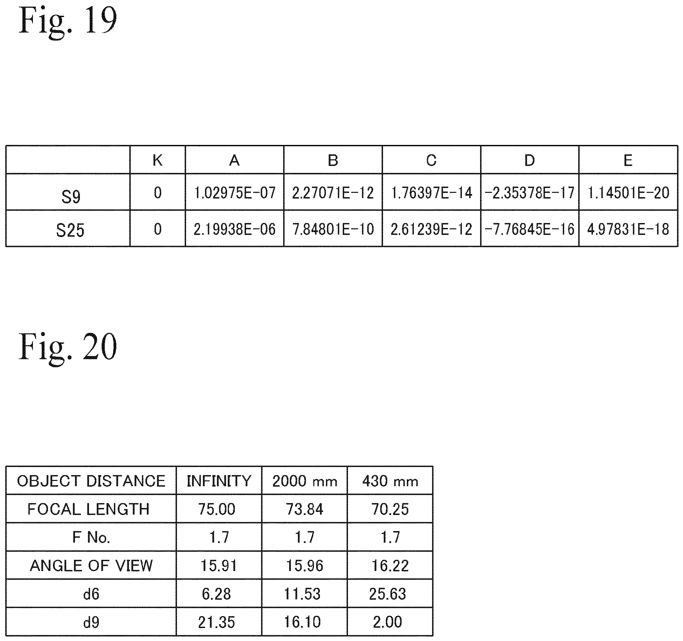

Fig. 19 depicts data on aspherical surfaces in the lens system depicted in Fig. 17.
[Fig. 20]
Fig. 20 depicts various numeric values of the lens system depicted in Fig. 17.
[Fig. 21]

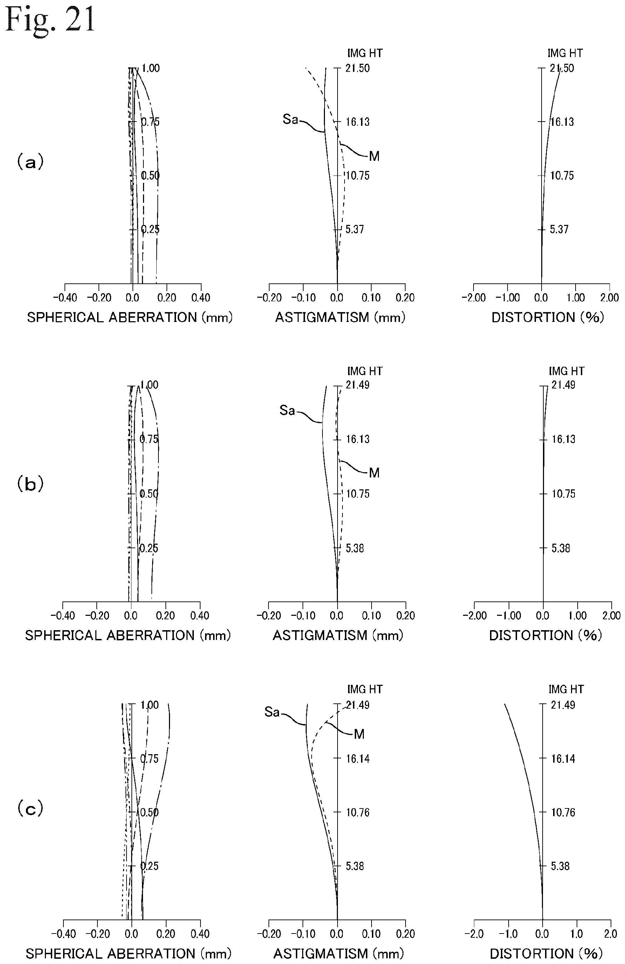

Fig. 21 depicts various aberrations of the lens system depicted in Fig. 17.
[Fig. 22]

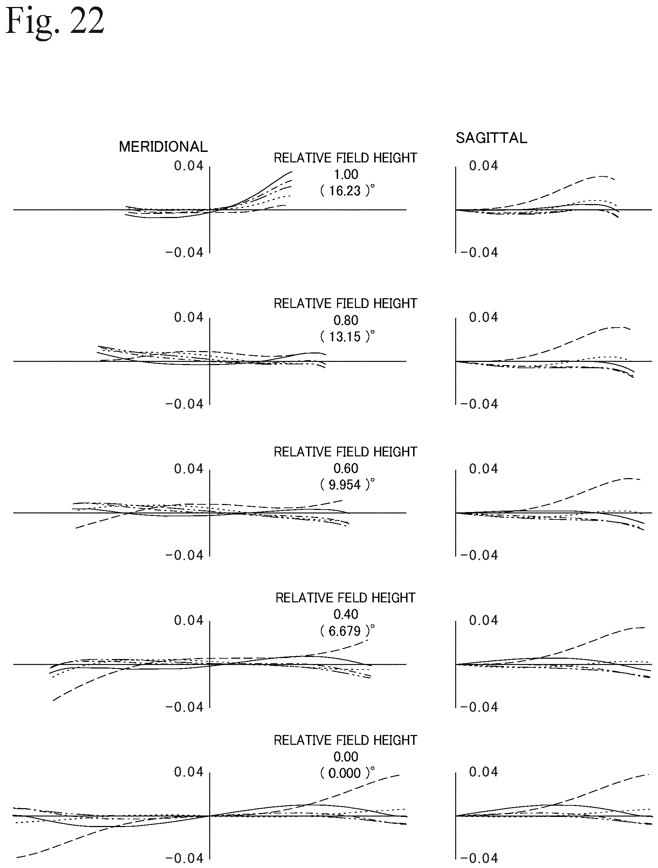

Fig. 22 depicts the transverse aberration at infinity of the lens system depicted in Fig. 17.

[Fig. 23]

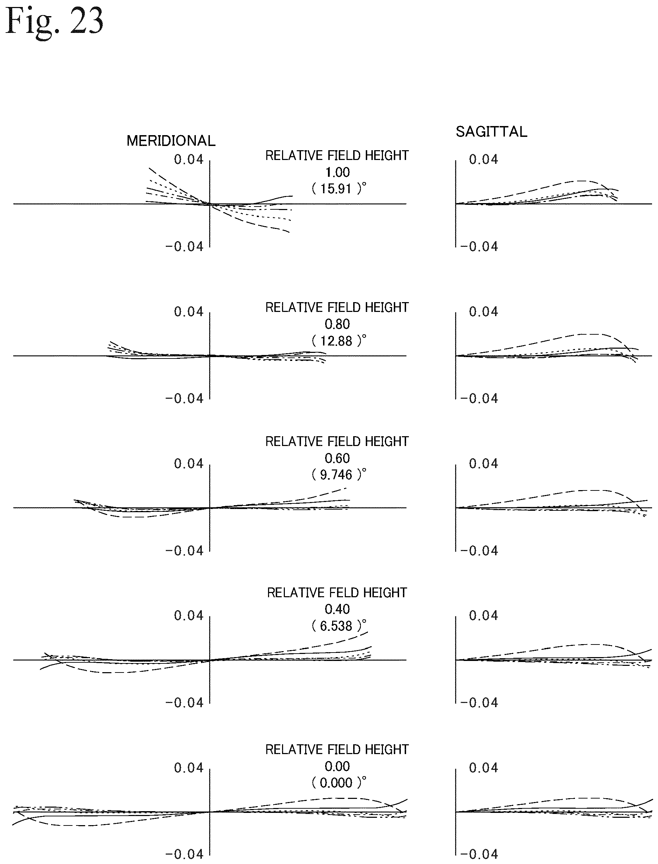

Fig. 23 depicts the transverse aberration at an intermediate distance of the lens system depicted in Fig. 17.

[Fig. 24]

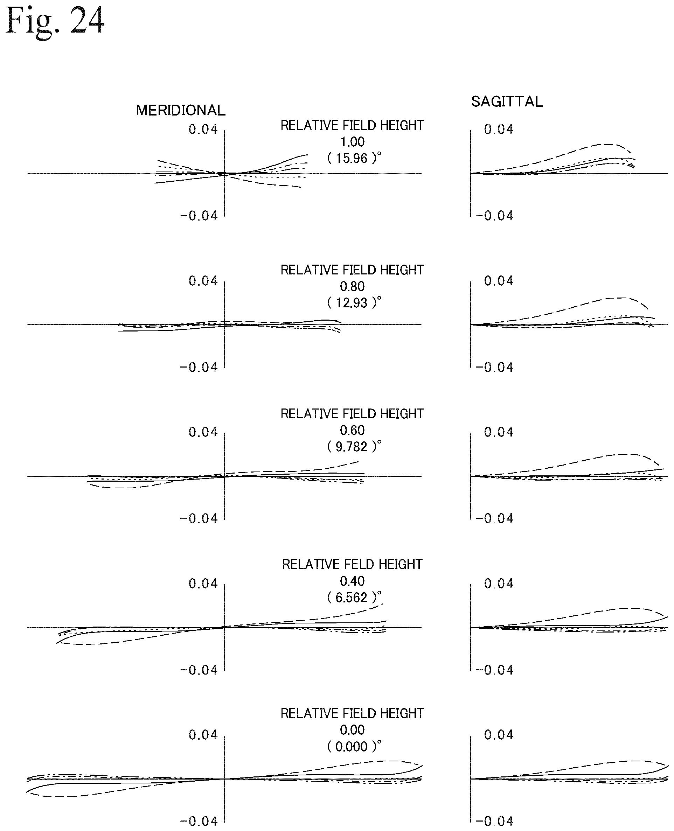

Fig. 24 depicts the transverse aberration at the nearest distance of the lens system depicted in Fig. 17.

Description of Embodiments

Fig. 1 depicts one example of an image pickup apparatus (camera or camera device) including an optical system for image pickup. Fig. 1(a) depicts a state where the system is focused at infinity, and Fig. 1(b) depicts a state where the system is focused at a nearest distance. The camera (image pickup apparatus, imaging device) 1 includes a lens system (optical system, image pickup optical system or image forming optical system) 10 and an image pickup element (image pickup device or image plane) 5 disposed on the image plane side (image side, image pickup side, or image forming side) 12 of the lens system 10. This image pickup lens system 10 for image pickup is composed, in order from the object side (subject side) 11, of a first lens group G1 that has negative refractive power and is fixed during focusing, a second lens group G2 that has positive refractive power and moves during focusing, a third lens group G3 that has positive refractive power and is fixed during focusing, and a fourth lens group G4 that has positive refractive power, has a stop St disposed on the object side 11, and is fixed during focusing.

The lens system 10 is a negative-positive-positive-positive four-group, retrofocus type, is an inner-focus system where only the second lens group G2 moves along the optical axis 7 during focusing, and has the stop St disposed between the third lens group G3 and the fourth lens group G4 that are fixed. A retrofocus type where the lens group G1 closest to the object side 11 has negative refractive power is suited to producing bright and sharp images, and is thought to be suited to wide-angle lenses, not telephoto lenses. In the lens system 10 according to the present embodiment, the first lens group G1 includes the first lens L11 with positive refractive power disposed closest to the object side 11 (the most of the object side, the most object side) and a lens (terminal lens, group-terminal lens, final lens) L13 with negative refractive power disposed closest to the image plane side 12. In more detail, the first lens group G1 includes the biconvex first lens L11 with positive refractive power disposed closest to the object side 11 and the lens L13 with negative refractive power that is concave on the object side 11 and is disposed closest to the image plane side 12.

By disposing the biconvex positive lens L11 closest to the object side 11 of the first lens group G1 and disposing a lens with negative refractive power that is concave on the object side 11, in the present embodiment, the negative meniscus lens L13, closest to the image plane side 12, it is possible to introduce, with the first lens (the lens closest to the object side) L11 and the terminal lens (the lens closest to the image plane side) L13, a telephoto-type configuration, with a positive-negative arrangement of refractive powers and where a surface on the object side 11 of the negative lens L13 is concave, into the first lens group G1 which as a whole has negative refractive power. Accordingly, the focal length is extended and performance that is suited to a telephoto is achieved while utilizing a retrofocus-type configuration where it is easy to obtain bright images. In the present embodiment, it is possible to achieve a telephoto-type lens system 10 with a focal length of 75 mm when focusing at infinity.

By making the first lens group G1 a "positive-lead" telephoto type where the lens L11 with positive refractive power is disposed on the object side 11, it is possible to provide a sufficient distance from the lens L13 with negative refractive power that is disposed on the image plane side 12. Since light flux gathered by the lens L11 with positive refractive power reaches the lens L13 with negative refractive power disposed a certain distance away, it is possible to reduce the diameter of the lens on the image plane side 12 of the first lens group G1 where the lens diameter tends to increase. It is also possible to reduce the lens diameters of other lens groups that follow the first lens group G1. This means it is possible to provide a bright lens system 10 that is compact.

Accordingly, it is desirable for the lens L11 with positive refractive power closest to the object side 11 (the most of object side) of the first lens group G1 to have a certain amount of refractive power, and with consideration to aberration correction, it is desirable for the lens to be a biconvex lens where surfaces with positive refractive power are symmetrically arranged. In addition, it is desirable for both surfaces of the biconvex lens (first lens) L11 to be as similar as possible in order to perform favorable aberration correction, that is, for the radius of curvature R1 of the surface S1 on the object side 11 and the radius of curvature R2 of the surface S2 on the image plane side 12 to satisfy the following Condition (1).

$$0.5 \leq |R1/R2| \leq 1.5 \cdots (1)$$

The lower limit of Condition (1) may be 0.75 and the upper limit may be 1.3.

In addition, the first lens group G1 may include, in order from the object side 11, the first lens L11, the second lens L12 with negative refractive power, and the negative third lens L13 that is concave on the object side 11 and is disposed closest to the image plane side 12. In the lens system 10 according to the present embodiment, the first lens group G1 includes the biconvex positive lens L11, the negative meniscus lens L12 that is convex on the object side 11, and the negative meniscus lens L13 that is concave on the object side 11. The first lens group G1 has a positive-negative-negative configuration and has negative refractive power as a whole, which means that the refractive power of the second lens L12 and the third lens L13 increases. This means that the light flux from the first lens group G1 toward the second lens group G2 that moves during focusing tends to be parallel or slightly spreading with respect to the optical axis 7, and passes through substantially the same position even if the second lens group G2 moves for focusing. Accordingly, this configuration is favorable for suppressing fluctuations in magnification and fluctuations in angle of view during focusing.

In addition, in a configuration composed of the biconvex positive lens L11 and two negative meniscus lenses L12 and L13 that are concave in facing directions, the orientations and number of surfaces are symmetrical, which is suited to reducing the Petzval sum of the first lens group G1. This means that it is possible to favorably correct aberration in the first lens group G1 and to supply light flux whose aberration has been favorably corrected to the second lens group G2 used for focusing, which lessens fluctuations in the angle of view due to focusing (so-called "breathing"). This configuration is also effective in reducing the difference between sagittal rays and meridional rays, which is also effective in improving the MTF (Modulation Transfer Function).

The second lens L12 of the first lens group G1 may be a low anomalous dispersion lens and the third lens L13 may be a high dispersion lens. By making the combination L12 and L13 of lenses with negative refractive power in the first lens group G1 a combination of negative power lenses with different dispersion tendencies in the form of a low anomalous dispersion lens and a high dispersion lens, it is possible to favorably correct various aberrations, such as chromatic aberration of magnification. Accordingly, it is possible to reduce the number of aspherical surfaces and to provide the lens system 10 in which aberration is favorably corrected at low cost.

The ratio ("half spherical ratio ") between the effective radius G1LSH (in the present embodiment, D6/2) and the radius of curvature G1LSr (in the present embodiment, R6) of the surface closest to the image plane 12 in the first lens group G1, that is, the surface G1LS (in the present embodiment, the surface S6) on the image plane side 12 of the third lens L13 may satisfy the following Condition (2).

$$0 < |G1LSH/G1LSr| \leq 0.14 \cdots (2)$$

By reducing the half spherical ratio of the closest surface to the image plane 12 in the first lens group G1, that is, the surface G1LS facing the second lens group G2 that moves during focusing and making the surface close to a flat surface, it is possible to suppress any sudden change in the direction of the light flux immediately before entering the second lens group G2. Accordingly, it is possible to suppress fluctuations in the angle of view due to focusing and to reduce the difference between sagittal rays and meridional rays, which is also effective in improving the MTF.

In a retrofocus-type lens system, since the positive refractive power of the rear group is typically strong, the angle of view will tend to vary in an inner-focus system where a lens with positive refractive power moves during focusing. For this reason, in the lens system 10, the rear group with positive refractive power is divided into three groups to disperse the power and the refractive power of the second lens group G2 that moves during focusing is suppressed, thereby producing a configuration where even if the second lens group G2 moves during focusing, the magnification hardly fluctuates and there is little breathing. In addition, by disposing the stop St between the third lens group G3 and the fourth lens group G4 which are fixed and do not move during focusing, the F number is prevented from fluctuating due to focusing. This means that it is possible to provide a telephoto-type lens system where the focus can be freely adjusted while hardly considering fluctuations in the angle of view and fluctuations in brightness.

The second lens group G2 may be constructed of a single lens or a cemented lens that is meniscus-type lens, has positive refractive power, and is concave on the object side 11. In the lens system 10 according to the present embodiment, the second lens group G2 is composed of a positive meniscus-type cemented lens B21 that is concave on the object side 11 and includes, from the object side 11, a biconcave negative lens L21 and a biconvex positive lens L22. A retrofocus-type system has strong positive refractive power and the Petzval sum tends to increase. In this lens system 10, increases in the Petzval sum are suppressed by disposing a surface that is concave on the object side 11 in the second lens group G2 positioned closest to the object side 11 out of the rear group that has positive refractive power, which makes it possible to provide a lens system 10 that can favorably correct aberration, and in particular spherical aberration and coma aberration.

In addition, by using a surface that is concave on the object side 11 as the object side 11 surface of the cemented lens B21 that faces the first lens group G1 on the object side 11, it becomes possible to position the second lens group G2 closer to the first lens group G1 during focusing. By doing so, light flux, including peripheral light, that tends to spread at the first lens group G1 that has negative refractive power can be captured by the second lens group G2 and transmitted to the lens groups on the image plane side 12. This means that it is possible to provide a lens system 10 that is brighter and has a small F number. Also, by disposing the second lens group that has positive refractive power close to the first lens group G1 that has negative refractive power, the spreading of light flux can be suppressed, which makes it possible to suppress the sizes of the third lens group G3 onwards on the image plane side, so that a more compact lens system 10 can be provided.

Also, due to the second lens group G2 that performs focusing including the cemented lens B21 or being configured by the cemented lens B21, it is possible to provide the second lens group G2 with a function of correcting aberration in keeping with the focusing distance, and in particular, a function of correcting chromatic aberration.

The third lens group G3 includes, in order from the object side 11, lenses L31 and L32, which have positive refractive power, and a cemented lens B31, which has positive refractive power and is composed of a lens L33 with positive refractive power and a lens L34 with negative refractive power. In a retrofocus-type configuration, although the rear group is provided with strong positive refractive power, chromatic aberration can be improved by providing the cemented lens B31 that has positive refractive power in the third lens group. In addition, by disposing the lenses L31 and L32 with positive refractive power on the object side 11 and using a configuration where the positive lenses L31, L32, and L33 are aligned from the object side 11, it is possible to disperse the surfaces with positive refractive power and suppress sharp bending of the light flux. Accordingly, this configuration is suited to improving spherical aberration.

The fourth lens group G4 includes, in order from the object side 11, a first cemented lens B41 composed of a lens L41 with negative refractive power and a lens L42 with positive refractive power, a second cemented lens B42 composed of a lens L43 with negative refractive power and a lens L44 with positive refractive power, a negative meniscus lens L45 that is concave on the object side, and a lens L46 with positive refractive power. The fourth lens group G4 as a whole is a combination of negative-positive-negative-positive-negative-positive lenses from the object side 11, so that axial chromatic aberration can be easily corrected. In addition, by providing independent surfaces through the use of independent lenses as the two lenses on the image plane side 12, it is easy to correct other aberrations, including chromatic aberration of magnification.

In addition, the configuration of the fourth lens group G4 adjacent to the stop St has a negative-positive arrangement of refractive powers, which is symmetrical across the stop St with the positive-negative configuration of the third lens group G3 adjacent to the stop St. This configuration is favorable for aberration correction. That is, a configuration where the third lens group G3 includes the cemented lens B31 that is disposed adjacent to the stop St and includes, from the object side 11, the lens L33 with positive refractive power and the lens L34 with negative refractive power, and the fourth lens group G4 includes the cemented lens B41 that is disposed adjacent to the stop St and includes, from the object side 11, the lens L41 with negative refractive power and the lens L42 with positive refractive power, has a high degree of symmetry across the stop St, making it easy to favorably correct aberration.

In the lens system 10, the third lens group G3 is on the object side 11 of the stop St and includes, from the object side 11, the at least one lens L32 with positive refractive power and the cemented lens B31 composed of the lens L33 with positive refractive power and the lens L34 with negative refractive power. The cemented lens B31 is adjacent to the stop St. The fourth lens group G4 disposed on the other side of the stop St includes the cemented lens (first cemented lens) B41 that is disposed adjacent to the stop St and is composed, from the object side 11, of the lens L41 with negative refractive power and the lens L42 with positive refractive power, the cemented lens (second cemented lens) B42 composed of the lens L43 with negative refractive power and the lens L44 with positive refractive power, and the lens L45 with negative refractive power. This configuration has a high degree of symmetry of refractive powers across the stop St and is suited to aberration correction.

Also, in the lens system 10, as described earlier, a configuration with two lenses, that is, the lenses L31 and L32, is used as the lenses with positive refractive power on the object side 11 of the cemented lens B31 of the third lens group G3. This means that while maintaining symmetry of refractive powers between the third lens group G3 and the fourth lens group G4 across the stop St, the positive refractive power is dispersed and processed by a number of lenses, which increases the number of lens surfaces that can be used for aberration correction. Accordingly, this configuration is suited to aberration correction, and in particular correction of spherical aberration.

The refractive indices (d line) nd31 and nd32 and the Abbe numbers vd31 and vd32 of the two lenses L31 and L32 may satisfy the following Condition (3).

$$1.75 \leq nd31, nd32 \leq 1.95$$

$$15 \leq vd31, vd32 \leq 35 \cdots (3)$$

By using lenses with a high refractive index, the curvature of the surfaces of the lenses can be reduced, which suppresses the occurrence of aberration. By disposing a high-dispersion lens with a low Abbe number which still has positive refractive power, the dispersion of power is changed in the retrofocus-type lens system 10 that includes many lenses with positive refractive power, with the aim of reducing chromatic aberration. The lower limit of the refractive index in Condition (3) may be 1.8 and the upper limit may be 1.93. Also, the lower limit of the Abbe number in Condition (3) may be 20 and the upper limit may be 33.

In addition, the fourth lens group G4 includes, on the image plane side 12 of the lens L45 with negative refractive power, a lens L46 with positive refractive power as the lens closest to the image plane side 12 (the most of image plane side) of the lens system 10. With respect to the image plane 5, the light flux is expanded from the optical axis 7 by the lens L45 with negative refractive power and can be made parallel to the optical axis 7 by this lens L46 that has positive refractive power. Accordingly, it is possible to perpendicularly (that is, in parallel with the optical axis 7) form the light flux onto an image on the image plane 5 with a large image circle, and possible to form larger and sharper images. In particular, the surface on the image plane side 12 of the lens L45 that has negative refractive power may be convex on the image plane side 12 and the lens L46 with positive refractive power may be a biconvex positive lens. By dispersing the positive refractive power immediately before the image plane 5 among a plurality of surfaces, it is possible to suppress the generation of aberration and to also favorably perform aberration correction.

One example of the cemented lens (first cemented lens) B41 on the object side 11 of the fourth lens group G4 is a combination of a lens L41 with negative refractive power and anomalous dispersion and a lens L42 with positive refractive power and low anomalous dispersion. By using anomalous dispersion-type lenses in the cemented lens, it is possible to favorably correct chromatic aberration of magnification, in addition to axial chromatic aberration.

The half spherical ratio, which is the ratio between the effective radius G4B1MH and the radius of curvature G4B1Mrof the cemented surface G4B1M (in the present embodiment, the surface S19) of the first cemented lens B41 in the fourth lens group G4 may satisfy the following Condition (4).

$$0.65 < |G4B1MH/G4B1Mr| \leq 0.80 \cdots (4)$$

In the fourth lens group G4 disposed between the image plane side 12 of the stop St and the image plane 5, it is desirable for various aberrations, and in particular chromatic aberration of magnification, to be favorably corrected. Since chromatic aberration of magnification can be sufficiently corrected by the cemented lens B41 that is disposed closest to the object side 11 in the fourth lens group G4 and near to the image plane side 12 of the stop St, it is possible to greatly reduce the aberration correction load of the following lenses. To do so, it is desirable for the cemented surface G4B1M of the first cemented lens B41 to have a certain amount of curvature. In particular, as described earlier, in a cemented lens B41 that is a combination of a lens L41 with negative refractive power and high dispersion and a lens L42 with positive refractive power and low anomalous dispersion, providing the cemented surface G4B1M with a certain amount of curvature is effective for correcting chromatic aberration of magnification.

It is also desirable for the cemented surfaces of the cemented lenses B41 and B42 in the fourth lens group G4 to both be convex on the object side 11 and symmetrical to the cemented surface of the cemented lens B31 in the third lens group G3 (which is concave on the object side 11). These cemented surfaces have a symmetrical arrangement with the stop St in the center, which is a configuration suited to aberration correction.

A more detailed description will now be given with reference to the drawings. Fig. 1 depicts the lens arrangement of the lens system 10 in different states. Fig. 1(a) depicts the lens arrangement when the focus position is at infinity, and Fig. 1(b) depicts the lens arrangement when the focus position is the nearest distance (shortest position, 430 mm).

The lens system 10 is a telephoto lens with a focal length of around 75 mm at infinity, and has a suitable configuration for an interchangeable lens of the camera 1 used for shooting or recording (image pickup) of movies or video. The lens system 10 has a four-group configuration composed, in order from the object side 11, of the first lens group G1 with overall negative refractive power, the second lens group G2 with overall positive refractive power, the third lens group G3 with overall positive refractive power, the stop St, and the fourth lens group G4 with overall positive refractive power. The first lens group G1, the third lens group G3, and the fourth lens group G4 are fixed lens groups that do not move, so that the distance from the image plane 5 does not change during focusing. When the focus position moves from infinity to the near distance during focusing, the second lens group G2 monotonously moves toward the image plane side 12.

Fig. 2 depicts data on the respective lenses that construct the lens system 10. The radius of curvature (Ri) is the radius of curvature (in mm) of each surface of each lens disposed in order from the object side 11, the distance di is the distance (interval, in mm) between the respective lens surfaces, the effective diameter (Di) is the effective diameter of each lens surface (diameter, in mm), the refractive index nd is the refractive index (d-line) of each lens, and the Abbe number vd is the Abbe number (d-line) of each lens. In Fig. 2, the surfaces that have a surface number marked with an asterisk are aspherical surfaces, and the lenses whose lens names have been marked with an asterisk are lenses that use anomalous dispersion glass. The same applies to the embodiments described later.

Fig. 3 depicts coefficients of the aspherical surface included in the lens system 10. In this example, the surface S25 on the image plane side of the lens L45 of the fourth lens group G4 is aspherical. In view of this system being an interchangeable lens, it is desirable for any aspherical surfaces to be surfaces located inside the lens system 10. Also, in view of cost, it is desirable to include few aspherical surfaces. In the lens system 10 according to the present embodiment, a sufficient aberration correction function is achieved by using the configuration described above, so that it is sufficient to use only one aspherical surface. This means a lens system 10 that obtains bright and sharp images is provided at low cost.

When X is the coordinate in the optical axis direction, Y is the coordinate in the direction perpendicular to the optical axis, the direction in which light propagates is positive, and R is the paraxial radius of curvature, the aspherical surface is expressed by the following equation (X) using the coefficients K, A, B, C, D, and E depicted in Fig. 3. The same also applies to the following embodiments. Note that "En" means "10 to the nth power".

$$X = (1/R)Y^2/[1+\{1-(1+K)(1/R)^2Y^2\}^{1/2}]+AY^4+BY^6+CY^8+DY^{10}+EY^{12}$$

$$\cdots (X)$$

Fig. 4 depicts the values of the focal distance f, the F number (F No.), the angle of view, and the variable intervals d6 and d9 in the lens system 10 when the focal length of the lens system 10 is at infinity, at an intermediate position (2280 mm), and at the nearest distance (shortest distance, 430 mm).

Fig. 5 depicts spherical aberration, astigmatism, and distortion for when the focal length of the lens system 10 is at infinity (Fig. 5(a)), at an intermediate position (2280 mm) (Fig. 5(b)), and at the nearest distance (shortest distance, 430 mm) (Fig. 5(c)). Fig. 6 depicts the transverse aberration at infinity. Fig. 7 depicts the transverse aberration at an intermediate position (2280 mm), and Fig. 8 depicts the transverse aberration at the nearest distance (shortest, 430 mm). Spherical aberration is depicted for the wavelengths of 404.6560 nm (dot-dash line), 435.8340 nm (dashed line), 486.1330 nm (dotted line, short dashed line), 546.0740 nm (dot-dot-dash line), 587.5620 nm (short dot-dash line), and 656.2720 nm (solid line). Astigmatism is depicted for meridional (tangential) rays M and sagittal rays Sa. The same applies to the aberration diagrams described later.

The lens system 10 depicted in the drawings is composed of a total of 15 lenses (L11 to L13, L21 to L22, L31 to L34, L41 to L46). The first lens group G1 disposed closest to the object side 11 of the lens system 10 that has a three-lens configuration including, in order from the object side 11, the biconvex positive lens (first lens) L11, the negative meniscus lens L12 that is convex on the object side 11, and the negative meniscus lens L13 that is concave on the object side 11.

The second lens group G2, which is the focusing lens group, is the cemented lens B21 that is composed of the biconcave negative lens L21 and the biconvex positive lens L22. This configuration is the cemented lens B21 on its own, which as a whole is a positive meniscus lens that is concave on the object side 11.

The third lens group G3 is composed, in order from the object side 11, of the positive meniscus lenses L31 and L32 that are convex on the object side 11 and the cemented lens B31 composed of the biconvex positive lens L33 and the biconcave negative lens L34.

The fourth lens group G4, which is disposed on the image plane side 12 of the third lens group G3 with the stop St in between and is closest to the image plane side 12, is composed of the cemented lens B41, which is made up of the negative biconcave lens L41 and the biconvex positive lens L42, the cemented lens B42 which is made up of the biconcave negative lens L43 and the biconvex positive lens L44, the negative meniscus lens L45 that is concave on the object side 11, and the biconvex positive lens L46.

The lens system 10 depicted in Fig. 1 includes all of the configurations described above, and the values of the respective conditions are as follows.

Condition (1) (|R1/R2|) : 0.83
Condition (2) (|G1LSH/G1LSr|(|D6/2/R6|)) : 0.004
Condition (3) (nd31, nd32, vd31, vd32) : 1.82, 1.91, 22.8, 31.3
Condition (4) (|G4B1MH/G4B1Mr|(|D19/2/R19|)) : 0.70

The lens system 10 depicted in Fig. 1 satisfies all of the Conditions (1) to (4), has a sufficiently large angle of view of 16.05 for a telephoto with a focal length of 75 mm, and is an extremely bright lens system with an F number of 1.69. In addition, with the lens system 10, when focusing from infinity to the near distance, the F number is fixed, the angle of view hardly changes, and there is hardly any breathing or fluctuations in magnification. Accordingly, it is possible to easily perform focusing and obtain images that are sharp and have little fluctuation in brightness at the desired focal position. In addition, as depicted in Figs. 5 to 8, it is possible to acquire images in which various aberrations are favorably corrected across the entire focusing range.

Fig. 9 depicts a different example of lens system 10. Fig. 9(a) depicts the lens arrangement when the focus position is at infinity, and Fig. 9(b) depicts the lens arrangement when the focus position is the nearest distance (shortest distance, 430 mm). This lens system 10 is also constructed of a total of 15 lenses (L11 to L13, L21 to 22, L31 to L34, and L41 to L46), and includes, in order from the object side 11, a first lens group G1 that has negative refractive power and is fixed during focusing, a second lens group G2 that has positive refractive power and moves during focusing, a third lens group G3 that has positive refractive power and is fixed during focusing, and a fourth lens group G4 that has a stop St disposed on the object side 11, has positive refractive power, and is fixed during focusing.

Accordingly, this lens system 10 is also a retrofocus type with a negative-positive-positive-positive four-group configuration, and is an inner-focus system where only the second lens group G2 moves along the optical axis 7 during focusing. In addition, the lens system also has the stop St disposed between the third lens group G3 and the fourth lens group G4 that are fixed. The first lens group G1 includes a biconvex positive lens L11 that is disposed closest to the object side 11 (the most of object side) and a lens L13 with negative refractive power that is concave on the object side 11 and is disposed closest to the image plane side 12. The lens system 10 as a whole has a retrofocus-type configuration, but is bright and has sufficient performance as a telephoto system.

Fig. 10 depicts data on each lens that constructs the lens system 10. Fig. 11 depicts coefficients of the aspherical surface included in the lens system 10 and Fig. 12 depicts the focal length f, the F number (F No.), the angle of view, and the values of the variable intervals d6 and d9 of the lens system 10 when the focal length of the lens system 10 is at infinity, at an intermediate position (2280 mm), and at the nearest distance (shortest distance, 430 mm). Fig. 13 depicts spherical aberration, astigmatism, and distortion when the focal length of the lens system 10 is at infinity (Fig. 13(a)), at an intermediate position (2280 mm) (Fig. 13(b)), and at the nearest distance (430 mm) (Fig. 13(c)). Figs. 14 to 16 depict transverse aberration at infinity, at an intermediate position (2280 mm), and at the nearest distance (430 mm).

In this lens system 10, the approximate lens configurations and arrangement are the same as the lens system 10 depicted in Fig. 1. The values of the various conditions of the lens system 10 depicted in Fig. 9 are as follows.

Condition (1) (|R1/R2|) : 1.17
Condition (2) (|G1LSH/G1LSr|(|D6/2/R6|)) : 0.014
Condition (3) (nd31, nd32, vd31, vd32) : 1.82, 1.91, 22.8, 31.3
Condition (4) (|G4B1MH/G4B1Mr|(|D19/2/R19|)) : 0.70

The lens system 10 depicted in Fig. 9 satisfies all of Conditions (1) to (4), and is a lens system that is relatively wide-angle, with an angle of view of around 16.03 degrees, for a telephoto lens with a focal length of around 75 mm, and is extremely bright with an F number of 1.69. In addition, with the lens system 10, when focusing from infinity to the near distance, the F number is fixed, the angle of view hardly changes, and there is hardly any breathing or fluctuations in magnification. Accordingly, it is possible to easily perform focusing and obtain images that are sharp and have little fluctuation in brightness at the desired focal position. In addition, as depicted in Figs. 13 to 16, it is possible to acquire images in which various aberrations are favorably corrected across the entire focusing range.

Fig. 17 depicts yet another lens system 10. Fig. 17(a) depicts the lens arrangement when the focus position is at infinity, and Fig. 17(b) depicts the lens arrangement when the focus position is the nearest distance (shortest distance, 430 mm). This lens system 10 is also constructed of a total of 15 lenses (L11 to L13, L21 to 22, L31 to L34, and L41 to L46), and includes, in order from the object side 11, a first lens group G1 that has negative refractive power and is fixed during focusing, a second lens group G2 that has positive refractive power and moves during focusing, a third lens group G3 that has positive refractive power and is fixed during focusing, and a fourth lens group G4 that has a stop St disposed on the object side 11, has positive refractive power, and is fixed during focusing.

Accordingly, this lens system 10 is also a retrofocus type with a negative-positive-positive-positive four-group configuration, and is an inner-focus system where only the second lens group G2 moves along the optical axis 7 during focusing. In addition, the lens system also has the stop St disposed between the third lens group G3 and the fourth lens group G4 that are fixed. The first lens group G1 includes a biconvex positive lens L11 that is disposed closest to the object side 11 and a lens L13 with negative refractive power that is concave on the object side 11 and is disposed closest to the image plane side 12. The lens system 10 as a whole has a retrofocus-type configuration, but is bright and has sufficient performance as a telephoto system.

Fig. 18 depicts data on each lens that constructs the lens system 10 depicted in Fig. 17. Fig. 19 depicts coefficients of the aspherical surfaces included in the lens system 10 and Fig. 20 depicts the focal length f, the F number (F No.), the angle of view, and the values of the variable intervals d6 and d9 of the lens system 10 when the focal length of the lens system 10 is at infinity, at an intermediate position (2000 mm), and at the nearest distance (shortest distance, 430 mm). Fig. 21 depicts spherical aberration, astigmatism, and distortion when the focal length of the lens system 10 is at infinity (Fig. 21(a)), at an intermediate position (2000 mm) (Fig. 21(b)), and at the nearest distance (430 mm) (Fig. 21(c)). Figs. 22 to 24 depict transverse aberration at infinity, at an intermediate position (2000 mm), and at the nearest distance (430 mm).

The lens arrangement of the lens system 10 is the same as the lens system 10 depicted in Fig. 1. However, aberration is further improved by making the image plane side 12 surface S9 of the second lens group G2 that moves during focusing an aspherical surface.

The values of the respective conditions of the lens system 10 depicted in Fig. 17 are as follows.

Condition (1) (|R1/R2|) : 0.97
Condition (2) (|G1LSH/G1LSr|(|D6/2/R6|)) : 0.098
Condition (3) (nd31, nd32, vd31, vd32) : 1.81, 1.81, 25.4, 25.4
Condition (4) (|G4B1MH/G4B1Mr|(|D19/2/R19|)) : 0.70

The lens system 10 depicted in Fig. 17 satisfies all of Conditions (1) to (4), is a lens system that is relatively wide-angle, with an angle of view of around 15.9 degrees, for a telephoto lens with a focal length of around 75 mm, and is extremely bright with an F number of 1.7. In addition, with the lens system 10, when focusing from infinity to the near distance, the F number is fixed, the angle of view hardly changes, and there is hardly any breathing. Accordingly, it is possible to easily perform focusing and obtain images that are sharp and have little fluctuation in brightness at the desired focal position. In addition, as depicted in Figs. 21 to 25, it is possible to acquire images in which various aberrations are favorably corrected across the entire focusing range.

**Claims**

1. A lens system for image pickup comprising, in order from an object side:

   a first lens group that has negative refractive power and is fixed during focusing;
   a second lens group that has positive refractive power and moves during focusing;
   a third lens group that has positive refractive power and is fixed during focusing; and
   a fourth lens group that has a stop disposed on the object side, is fixed during focusing, has positive refractive power, and is disposed closest to an image plane side,
   wherein the first lens group includes a first lens with positive refractive power that is disposed closest to the object side and a terminal lens with negative refractive power disposed closest to the image plane side.

2. The lens system according to claim 1,
   wherein the first lens is biconvex, has positive refractive power, and is disposed closest to the object side and the terminal lens is concave on the object side and has negative refractive power.

3. The lens system according to claim 1 or 2,
   wherein a radius of curvature R1 of an object side surface and a radius of curvature R2 of an image plane side surface of the first lens satisfy a following condition.

$$0.5 \leq |R1/R2| \leq 1.5$$

4. The lens system according to any one of claims 1 to 3,
   wherein the first lens group includes, in order from the object side, the first lens, a second lens with negative refractive power, and the terminal lens.

5. The lens system according to claim 4,
   wherein the second lens is a low anomalous dispersion lens and the terminal lens is a high dispersion lens.

6. The lens system according to any one of claims 1 to 5,
   wherein an effective radius G1LSH and a radius of curvature G1LSr of an image plane side surface of the terminal lens in the first lens group satisfy a following condition.

$$0 < |G1LSH/G1LSr| \leq 0.14$$

7. The lens system according to any one of claims 1 to 6,

wherein the fourth lens group includes, in order from the object side, a first cemented lens composed of a lens with negative refractive power and a lens with positive refractive power and a second cemented lens composed of a lens with negative refractive power and a lens with positive refractive power.

8. The lens system according to any one of claims 1 to 6,
wherein the third lens group includes, on the object side of the stop and from the object side, at least one lens with positive refractive power and a cemented lens that is disposed adjacent to the stop and is composed of a lens with positive refractive power and a lens with negative refractive power, and
the fourth lens group includes, from the object side, a first cemented lens that is disposed adjacent to the stop and is composed from the object side of a lens with negative refractive power and a lens with positive refractive power, a second cemented lens composed of a lens with negative refractive power and a lens with positive refractive power, and a lens with negative refractive power.

9. The lens system according to claim 8,
wherein the fourth lens group includes a lens with positive refractive power disposed closest to the image plane side.

10. The lens system according to claim 8 or 9,
wherein the at least one lens with positive refractive power in the third lens group includes two lenses with positive refractive power.

11. The lens system according to claim 10,
wherein d-line refractive index nd and d-line Abbe number vd of each of the two lenses with positive refractive power satisfy following conditions.

$$1.75 \leq nd \leq 1.95$$

$$15 \leq vd \leq 35$$

12. The lens system according to any one of claims 7 to 11,
wherein in the first cemented lens of the fourth lens group, the lens with negative refractive power is a high dispersion lens, and
the lens with positive refractive power is a low anomalous dispersion lens.

13. The lens system according to any one of claims 7 to 12,
wherein an effective radius G4B1MH and a radius of curvature G4B1Mr of a cemented surface of the first cemented lens in the fourth lens group satisfies a following condition.

$$0.65 < |G4B1MH/G4B1Mr| \leq 0.80$$

14. The lens system according to any one of claims 1 to 13,
wherein the second lens group is composed of a meniscus lens that is concave on the object side.

15. The lens system according to any one of claims 1 to 14,
wherein the second lens group is composed of a cemented lens made up, from the object side, of a lens with negative refractive power and a lens with positive refractive power.

16. An image pickup apparatus comprising:

the lens system according to any one of claims 1 to 15; and
an image pickup element disposed on an image plane side of the lens system.

EP 3 734 343 A1

# Fig. 1

(a)

(b)

12

# Fig. 2

| LENS SURFACE NUMBER (S) | RADIUS OF CURVATURE (Ri) | DISTANCE (di) | REFRACTIVE INDEX (nd) | ABBE NUMBER (νd) | EFFECTIVE DIAMETER (Di) | LENS | | FOCAL LENGTH (mm) |
|---|---|---|---|---|---|---|---|---|
| 1 | 309.626 | 6.79 | 1.85694 | 30.0 | 76.5 | L11* | | G1 |
| 2 | −371.769 | 18.04 | | | 75.5 | | | −81.43 |
| 3 | 143.162 | 1.40 | 1.59732 | 67.7 | 51.2 | L12* | | |
| 4 | 48.558 | 10.86 | | | 47.1 | | | |
| 5 | −64.612 | 1.40 | 1.72538 | 34.7 | 46.8 | L13 | | |
| 6 | −5995.156 | (VARIABLE) | | | 46.9 | | | |
| 7 | −140.842 | 1.40 | 1.80633 | 29.8 | 50.2 | L21* | B21 | G2 |
| 8 | 141.252 | 11.00 | 1.73234 | 54.7 | 53.1 | L22 | | 219.92 |
| 9 | −70.922 | (VARIABLE) | | | 54.6 | | | |
| 10 | 54.672 | 10.35 | 1.81643 | 22.8 | 60.1 | L31* | | G3 |
| 11 | 382.161 | 0.30 | | | 59.1 | | | 79.19 |
| 12 | 55.161 | 5.49 | 1.91048 | 31.3 | 54.9 | L32* | | |
| 13 | 83.032 | 0.30 | | | 52.8 | | | |
| 14 | 35.371 | 13.25 | 1.53947 | 74.7 | 47.4 | L33* | B31 | |
| 15 | −203.267 | 1.20 | 1.81263 | 25.5 | 43.6 | L34* | | |
| 16 | 24.08 | 10.14 | | | 34.3 | | | |
| 17 (STOP) | INFINITY | 3.67 | | | 33.3 | St | | |
| 18 | −199.066 | 1.20 | 1.72538 | 34.7 | 32.6 | L41 | B41 | G4 |
| 19 | 22.668 | 12.00 | 1.59732 | 67.7 | 31.8 | L42* | | 63.20 |
| 20 | −70.304 | 1.46 | | | 32.0 | | | |
| 21 | −41.443 | 1.20 | 1.59667 | 35.3 | 32.0 | L43* | B42 | |
| 22 | 31.412 | 11.00 | 1.79012 | 44.2 | 34.3 | L44 | | |
| 23 | −50.994 | 12.48 | | | 34.6 | | | |
| 24 | −63.236 | 2.00 | 1.69661 | 53.2 | 34.5 | L45 | | |
| 25* | −314.891 | 15.10 | | | 36.2 | | | |
| 26 | 62.626 | 9.50 | 1.81263 | 25.5 | 51.2 | L46* | | |
| 27 | −281.918 | 27.30 | | | 51.0 | | | |
| 28 | INFINITY | 3.00 | 1.51872 | 64.2 | 43.8 | COVER | | |
| 29 | INFINITY | 1.00 | | | 43.3 | | | |

## Fig. 3

|  | K | A | B | C | D | E |
|---|---|---|---|---|---|---|
| S25 | 0 | 1.93438E-06 | 2.19794E-10 | 4.30903E-12 | -4.63198E-15 | 8.57634E-18 |

## Fig. 4

| OBJECT DISTANCE | INFINITY | 2280 mm | 430 mm |
|---|---|---|---|
| FOCAL LENGTH | 75.00 | 74.07 | 70.67 |
| F No. | 1.69 | 1.69 | 1.69 |
| ANGLE OF VIEW | 16.05 | 16.08 | 16.26 |
| d6 | 8.65 | 12.54 | 25.17 |
| d9 | 18.52 | 14.63 | 2.00 |

# Fig. 5

(a)

SPHERICAL ABERRATION (mm)

ASTIGMATISM (mm)

DISTORTION (%)

(b)

SPHERICAL ABERRATION (mm)

ASTIGMATISM (mm)

DISTORTION (%)

(c)

SPHERICAL ABERRATION (mm)

ASTIGMATISM (mm)

DISTORTION (%)

## Fig. 6

MERIDIONAL

SAGITTAL

RELATIVE FIELD HEIGHT
1.00
( 16.05 )°

RELATIVE FIELD HEIGHT
0.80
( 12.95 )°

RELATIVE FIELD HEIGHT
0.60
( 9.773 )°

RELATIVE FIELD HEIGHT
0.40
( 6.545 )°

RELATIVE FIELD HEIGHT
0.00
( 0.000 )°

# Fig. 7

MERIDIONAL  RELATIVE FIELD HEIGHT  SAGITTAL

RELATIVE FIELD HEIGHT
1.00
( 16.08 )°

RELATIVE FIELD HEIGHT
0.80
( 12.97 )°

RELATIVE FIELD HEIGHT
0.60
( 9.790 )°

RELATIVE FIELD HEIGHT
0.40
( 6.557 )°

RELATIVE FIELD HEIGHT
0.00
( 0.000 )°

# Fig. 8

MERIDIONAL

RELATIVE FIELD HEIGHT
1.00
( 16.26 )°

SAGITTAL

RELATIVE FIELD HEIGHT
0.80
( 13.12 )°

RELATIVE FIELD HEIGHT
0.60
( 9.910 )°

RELATIVE FELD HEIGHT
0.40
( 6.639 )°

RELATIVE FIELD HEIGHT
0.00
( 0.000 )°

# Fig. 9

(a)

(b)

# Fig. 10

| LENS SURFACE NUMBER (S) | RADIUS OF CURVATURE (Ri) | DISTANCE (di) | REFRACTIVE INDEX (nd) | ABBE NUMBER (νd) | EFFECTIVE DIAMETER (Di) | LENS | | FOCAL LENGTH (mm) |
|---|---|---|---|---|---|---|---|---|
| 1 | 396.005 | 6.42 | 1.85694 | 30.0 | 76.0 | L11* | | G1 |
| 2 | −337.099 | 19.31 | | | 75.0 | | | −79.86 |
| 3 | 131.464 | 1.40 | 1.59732 | 67.7 | 50.1 | L12* | | |
| 4 | 47.568 | 10.68 | | | 46.2 | | | |
| 5 | −63.359 | 1.40 | 1.72538 | 34.7 | 46.0 | L13 | | |
| 6 | −1609.525 | (VARIABLE) | | | 46.0 | | | |
| 7 | −128.202 | 1.40 | 1.80633 | 29.8 | 50.0 | L21* | B21 | G2 |
| 8 | 148.274 | 11.00 | 1.73234 | 54.7 | 53.2 | L22 | | 228.78 |
| 9 | −68.871 | (VARIABLE) | | | 54.8 | | | |
| 10 | 56.491 | 10.17 | 1.81643 | 22.8 | 60.0 | L31* | | G3 |
| 11 | 456.809 | 0.30 | | | 59.1 | | | 75.88 |
| 12 | 52.257 | 6.03 | 1.91048 | 31.3 | 55.0 | L32* | | |
| 13 | 83.556 | 0.30 | | | 52.8 | | | |
| 14 | 37.602 | 12.72 | 1.53947 | 74.7 | 47.9 | L33* | B31 | |
| 15 | −210.204 | 1.20 | 1.81263 | 25.5 | 44.1 | L34* | | |
| 16 | 24.976 | 10.11 | | | 35.0 | | | |
| 17 (STOP) | INFINITY | 3.93 | | | 34.0 | St | | |
| 18 | −147.182 | 1.20 | 1.72538 | 34.7 | 33.1 | L41 | B41 | G4 |
| 19 | 23.089 | 12.00 | 1.59732 | 67.7 | 32.4 | L42* | | 64.30 |
| 20 | −59.506 | 1.10 | | | 32.6 | | | |
| 21 | −42.091 | 1.20 | 1.59667 | 35.3 | 32.6 | L43* | B42 | |
| 22 | 30.839 | 11.00 | 1.79012 | 44.2 | 34.8 | L44 | | |
| 23 | −53.682 | 11.96 | | | 35.0 | | | |
| 24 | −62.109 | 2.00 | 1.69661 | 53.2 | 34.2 | L45 | | |
| 25* | −315.094 | 16.81 | | | 35.8 | | | |
| 26 | 62.377 | 9.50 | 1.81263 | 25.5 | 51.6 | L46* | | |
| 27 | −312.335 | 27.12 | | | 51.4 | | | |
| 28 | INFINITY | 3.00 | 1.51872 | 64.2 | 43.9 | COVER | | |
| 29 | INFINITY | 1.00 | | | 43.4 | | | |

## Fig. 11

| | K | A | B | C | D | E |
|---|---|---|---|---|---|---|
| S25 | 0 | 2.09548E−06 | −7.02763E−10 | 8.05628E−12 | −1.15455E−14 | 1.39255E−17 |

## Fig. 12

| OBJECT DISTANCE | INFINITY | 2280 mm | 430 mm |
|---|---|---|---|
| FOCAL LENGTH | 75.00 | 74.11 | 70.79 |
| F No. | 1.69 | 1.69 | 1.69 |
| ANGLE OF VIEW | 16.03 | 16.05 | 16.24 |
| d6 | 7.24 | 11.13 | 23.75 |
| d9 | 18.50 | 14.62 | 2.00 |

# Fig. 13

(a)

SPHERICAL ABERRATION (mm)

ASTIGMATISM (mm)

DISTORTION (%)

(b)

SPHERICAL ABERRATION (mm)

ASTIGMATISM (mm)

DISTORTION (%)

(c)

SPHERICAL ABERRATION (mm)

ASTIGMATISM (mm)

DISTORTION (%)

# Fig. 14

MERIDIONAL     SAGITTAL

RELATIVE FIELD HEIGHT
1.00
( 16.03 )°

0.04

-0.04

0.04

-0.04

RELATIVE FIELD HEIGHT
0.80
( 12.94 )°

0.04

-0.04

0.04

-0.04

RELATIVE FIELD HEIGHT
0.60
( 9.767 )°

0.04

-0.04

0.04

-0.04

RELATIVE FIELD HEIGHT
0.40
( 6.543 )°

0.04

-0.04

0.04

-0.04

RELATIVE FIELD HEIGHT
0.00
( 0.000 )°

0.04

-0.04

0.04

-0.04

Fig. 15

MERIDIONAL    RELATIVE FIELD HEIGHT    SAGITTAL
                      1.00
      0.04          ( 16.05 )°           0.04

      -0.04                              -0.04

              RELATIVE FIELD HEIGHT
                      0.80
      0.04          ( 12.96 )°           0.04

      -0.04                              -0.04

              RELATIVE FIELD HEIGHT
                      0.60
      0.04          ( 9.785 )°           0.04

      -0.04                              -0.04

              RELATIVE FIELD HEIGHT
                      0.40
      0.04          ( 6.555 )°           0.04

      -0.04                              -0.04

              RELATIVE FIELD HEIGHT
                      0.00
      0.04          ( 0.000 )°           0.04

      -0.04                              -0.04

# Fig. 16

MERIDIONAL

SAGITTAL

RELATIVE FIELD HEIGHT
1.00
( 16.24 )°

RELATIVE FIELD HEIGHT
0.80
( 13.11 )°

RELATIVE FIELD HEIGHT
0.60
( 9.904 )°

RELATIVE FELD HEIGHT
0.40
( 6.637 )°

RELATIVE FIELD HEIGHT
0.00
( 0.000 )°

# Fig. 17

(a)

(b)

# Fig. 18

| LENS SURFACE NUMBER (S) | RADIUS OF CURVATURE (Ri) | DISTANCE (di) | REFRACTIVE INDEX (nd) | ABBE NUMBER ($\nu$ d) | EFFECTIVE DIAMETER (Di) | LENS | | FOCAL LENGTH (mm) |
|---|---|---|---|---|---|---|---|---|
| 1 | 346.382 | 7.74 | 1.85025 | 30.0 | 83.8 | L11* | | G1 |
| 2 | −356.011 | 19.80 | | | 82.6 | | | −88.87 |
| 3 | 170.074 | 1.50 | 1.53775 | 74.7 | 55.3 | L12* | | |
| 4 | 55.263 | 11.12 | | | 50.9 | | | |
| 5 | −72.942 | 1.50 | 1.64769 | 33.8 | 50.6 | L13 | | |
| 6 | 255.543 | (VARIABLE) | | | 50.0 | | | |
| 7 | −104.252 | 1.50 | 1.72047 | 34.7 | 50.4 | L21 | B21 | G2 |
| 8 | 86.047 | 12.09 | 1.72916 | 54.7 | 52.4 | L22 | | 234.77 |
| 9* | −69.408 | (VARIABLE) | | | 53.1 | | | |
| 10 | 61.374 | 7.05 | 1.80518 | 25.4 | 57.1 | L31* | | G3 |
| 11 | 142.759 | 0.30 | | | 56.2 | | | 74.56 |
| 12 | 51.671 | 8.92 | 1.80518 | 25.4 | 54.9 | L32* | | |
| 13 | 206.95 | 0.30 | | | 53.0 | | | |
| 14 | 33.97 | 12.01 | 1.53775 | 74.7 | 45.5 | L33* | B31 | |
| 15 | −423.702 | 1.20 | 1.80518 | 25.4 | 42.0 | L34* | | |
| 16 | 24.004 | 10.72 | | | 33.5 | | | |
| 17 (STOP) | INFINITY | 3.92 | | | 31.9 | St | | |
| 18 | −129.02 | 1.20 | 1.72047 | 34.7 | 30.8 | L41 | B41 | G4 |
| 19 | 21.269 | 11.50 | 1.59522 | 67.7 | 29.8 | L42* | | 61.99 |
| 20 | −64.277 | 3.46 | | | 29.9 | | | |
| 21 | −34.006 | 1.20 | 1.59270 | 35.3 | 29.5 | L43* | B42 | |
| 22 | 33.326 | 9.70 | 1.78590 | 44.2 | 31.6 | L44 | | |
| 23 | −45.521 | 13.04 | | | 32.0 | | | |
| 24 | −59.692 | 2.00 | 1.67790 | 54.9 | 35.2 | L45 | | |
| 25* | −220.352 | 11.05 | | | 37.0 | | | |
| 26 | 63.043 | 9.57 | 1.80518 | 25.4 | 50.2 | L46* | | |
| 27 | −200.919 | 26.00 | | | 50.1 | | | |
| 28 | INFINITY | 3.00 | 1.51680 | 64.2 | 43.8 | COVER | | |
| 29 | INFINITY | 1.00 | | | 43.3 | | | |

Fig. 19

| | K | A | B | C | D | E |
|---|---|---|---|---|---|---|
| S9 | 0 | 1.02975E-07 | 2.27071E-12 | 1.76397E-14 | -2.35378E-17 | 1.14501E-20 |
| S25 | 0 | 2.19938E-06 | 7.84801E-10 | 2.61239E-12 | -7.76845E-16 | 4.97831E-18 |

Fig. 20

| OBJECT DISTANCE | INFINITY | 2000 mm | 430 mm |
|---|---|---|---|
| FOCAL LENGTH | 75.00 | 73.84 | 70.25 |
| F No. | 1.7 | 1.7 | 1.7 |
| ANGLE OF VIEW | 15.91 | 15.96 | 16.22 |
| d6 | 6.28 | 11.53 | 25.63 |
| d9 | 21.35 | 16.10 | 2.00 |

# Fig. 21

(a)

SPHERICAL ABERRATION (mm)

ASTIGMATISM (mm)

DISTORTION (%)

(b)

SPHERICAL ABERRATION (mm)

ASTIGMATISM (mm)

DISTORTION (%)

(c)

SPHERICAL ABERRATION (mm)

ASTIGMATISM (mm)

DISTORTION (%)

# Fig. 22

# Fig. 23

MERIDIONAL                                                    SAGITTAL

RELATIVE FIELD HEIGHT
1.00
( 15.91 )°

RELATIVE FIELD HEIGHT
0.80
( 12.88 )°

RELATIVE FIELD HEIGHT
0.60
( 9.746 )°

RELATIVE FELD HEIGHT
0.40
( 6.538 )°

RELATIVE FIELD HEIGHT
0.00
( 0.000 )°

# Fig. 24

MERIDIONAL                                                    SAGITTAL

RELATIVE FIELD HEIGHT
1.00
( 15.96 )°

RELATIVE FIELD HEIGHT
0.80
( 12.93 )°

RELATIVE FIELD HEIGHT
0.60
( 9.782 )°

RELATIVE FELD HEIGHT
0.40
( 6.562 )°

RELATIVE FIELD HEIGHT
0.00
( 0.000 )°

**INTERNATIONAL SEARCH REPORT**

| International application No. |
| --- |
| PCT/JP2018/047818 |

**A.  CLASSIFICATION OF SUBJECT MATTER**
Int.Cl. G02B13/04(2006.01)i

According to International Patent Classification (IPC) or to both national classification and IPC

**B.  FIELDS SEARCHED**

Minimum documentation searched (classification system followed by classification symbols)
Int.Cl. G02B9/00-17/08, G02B21/02-21/04, G02B25/00-25/04

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br>A | JP 2004-126280 A (TAMRON CO., LTD.) 22 April 2004, embodiment<br>& US 2004/0066562 A1, paragraphs [0024]-[0052], fig. 1-4 & US 6912095 B2 & JP 3921160 B2 | 1, 3-4, 16<br>2, 5-15 |
| X<br>A | JP 10-260346 A (FUJI PHOTO OPTICAL CO., LTD.) 29 September 1998, examples 1-5<br>& US 5949589 A, examples 1-5 & JP 4225437 B2 | 1, 4, 16<br>2-3, 5-15 |
| X<br>A | JP 2012-22310 A (FUJIFILM CORPORATION) 02 February 2012, examples 1-7<br>& US 2011/0304921 A1, examples 1-7 & US 8379316 B2 & JP 5603292 B2 | 1, 4, 16<br>2-3, 5-15 |

☐  Further documents are listed in the continuation of Box C.   ☐  See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search<br>28.03.2019 | Date of mailing of the international search report<br>09.04.2019 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/047818

<What is examined>

Claim 1 includes, for the lens configuration of a lens system, the recitation "having a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side".

However, the description only discloses, as a specific example of the lens system above, a lens system composed of "a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side". No explanation based on principles is found that allows a person skilled in the art to understand that a lens system having a different lens configuration from the lens system of the specific example has optical properties similar to those of the lens system of the specific example.

Meanwhile, in the technical field of lens systems, it is common technical knowledge at the time of filing that different lens configurations, etc., such as the group configuration of lens groups forming a lens system, result in significantly different optical properties (aberration, etc.).

In view of this, no ground is found for broadening or generalizing the disclosure of the description to the scope of the invention of claim 1, even considering the common technical knowledge.

Accordingly, the invention of claim 1 goes beyond the scope disclosed in the description, and thus does not fulfill the requirement for support under PCT Article 6.

A similar evaluation applies to claims 2-16 that depend from claim 1.

Thus, among lens systems, lens systems other than a lens system composed of a first lens group that has a negative refractive power and is fixed when focusing is performed, a second lens group that has a positive refractive power and moves when focusing is performed, a third lens group that has a positive refractive power and is fixed when focusing is performed, and a fourth lens group that has a positive refractive power, is provided with an aperture stop on the object side, is fixed when focusing is performed, and is disposed closest to the image plane side, these lens groups being arranged in this order from the object side, cannot be examined in a meaningful manner, and thus have not been examined.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001228391 A